# EUROPEAN PATENT SPECIFICATION

(11) **EP 1 829 339 B1**
(45) Date of publication and mention of the grant of the patent: **02.11.2011**
(21) Application number: 04806420.8
(22) Date of filing: 22.12.2004
(51) Int. Cl.: H04M 1/247, G09G 5/26

(54) **IN-CAR USER INTERFACE FOR MOBILE PHONES**
BENUTZERSCHNITTSTELLE IM AUTO FÜR MOBILTELEFONE
INTERFACE DE TELEPHONE MOBILE S'UTILISANT DANS UN VEHICULE

(43) Date of publication of application: 05.09.2007
(73) Proprietor: Nokia Corporation, 02150 Espoo (FI)
(72) Inventor: SCHMITZ, Uwe, 40229 Düsseldorf (DE); KRUMMEL, Holger, 44789 Bochum (DE); LARIMA-BELLINGHOVEN, Pirjo, 47608 Geldern (DE)
(74) Representative: Becker Kurig Straus
(86) International application number: PCT/IB2004/004245
(87) International publication number: WO 2006/067541

(56) References cited:
- EP-A2- 1 406 158
- WO-A1-2004/037615
- DE-U1- 29 702 001
- US-A- 5 479 476
- US-A1- 2002 004 414
- US-A1- 2002 068 605
- US-A1- 2003 023 353
- US-B1- 6 314 285

## Description

The present invention relates to the field of hands-free units for cellular communication in vehicles. More specifically the present invention relates to the field of user interfaces for vehicle hands-free units. It also relates to a solution for increasing the operability of a user-input interface and output interface of vehicle hands-free units, especially to a remote control unit for such hands-free units.

At present there are a number of different car hands-free units known for the operation with mobile terminals/phones. It is known to use hands-free units with a mobile holder or a "phone cradle" and a remote control button. When a user puts a (matching) mobile phone into the cradle, the user may perform hands-free calls and control a few basic functions in the mobile phone (accept/terminate calls, initiate voice dialing).

An example of such car kits is the Nokia CK-7W^{TM} advanced car kit. This car kit provides a single button for accepting incoming calls, terminating calls, activating voice dialing and additionally provides a volume-control functionality.

Such a hands-free unit is also disclosed in document EP 1119160. This document discloses a hands-free kit for a car that can be used with many different mobile phones. The hands-free kit of EP 1119160 discloses no remote control or other user-input elements for remote control a phone in the cradle.

US patent application US 20030023353 A1 discloses different embodiments of steering wheel mounted remote control devices that in preferred embodiments may be used to access menu structures. This document also discloses turning display content of a display of the steering wheel.

From document WO 2004037615 A1 a vehicle information system is known that may be used to access menu structures of onboard devices of a vehicle.

Document DE 29702001 U1 discloses a hands-free device having a steering wheel mountable remote control unit, that may serve to remotely control a cellular phone in a cradle of a hands-free device (see especially figure 2 of D3).

Document US 20020068605 A1 pertains to a telephone interface included in a steering wheel of vehicle to enable a user to use a phone while driving without taking the hands off the steering wheel.

From DE 19741854 A1 a car radio is known having a handset that is inserted into a horizontally positioned holder in a front panel and has a screen as well as labeled control keys and can be used as the control unit for a car radio or as a telephone, the use of the handset is made easier in both operating positions by orienting the labeling of the control keys along an axis that is rotated out of the usual perpendicular alignment of the handset in the mounted position by an angle between 30 and 60 degrees in the direction of the longitudinal axis of the handset, thereby making the labeling easy to read in both operating positions of the handset.

Common hands-free units are provided with a cradle or with another receptacle for receiving a mobile telephone. Usually these cradles are mounted at the dashboard of a vehicle. The designers of modem vehicles strive to provide a highly sophisticated optical appearance which as one result leads to the fact that there are no areas in vehicles provided that can accommodate a cradle for a mobile phone. The usual approach for positioning a mobile phone is to fasten a cradle on the dashboard in the area of the car radio, within the reach of a user.

This conventional approach has the drawback that the distance of the phone to the user is larger than in conventional operation of the mobile phone. Especially senior persons often find it difficult to operate the tiny user-input interfaces with arms stretched out. In the conventional position of a cellular phone holder of a hands-free unit, the distance between the head/eyes of a user is at least double the distance of handheld operation.

Though mobile phones have become commonly used devices, which in some countries have already displaced the telephone line terminal as most used communication device, the spread of hands-free units in cars is still low. It is expected that low spread of hands-free units is caused by the complicated installation of hands-free units.

It is desirable to improve the operability of cellular phones with hands-free units in vehicle environments. It is also desirable to improve the input interface operability of cellular phones and hands-free units in vehicles. It is especially desirable to improve the output interface operability of cellular phones (and hands-free units) in a vehicle environment.

The present invention provides a remote control unit of a hands-free unit of a mobile terminal device, comprising the features of claim 1, a mobile terminal device, comprising the features of claim 9, and a method for changing the forms of representation on the display of mobile cellular telephone device comprising the features of claim 13. Advantageous embodiments of the present invention are disclosed in the dependent claims.

According to a first embodiment of the present invention a remote control unit for a vehicle hands-free unit for a mobile terminal device is provided. The mobile terminal device comprises a menu for accessing applications on said terminal device. The remote control unit comprises a housing, an interface to a hands-free unit, a user-input interface with an input device for browsing and accessing applications of said menu of said terminal device. The interface to a hands-free unit is connected to said housing.

In a basic embodiment said interface to a hands-free unit is provided as a cable remote control unit for a mobile telephone. That is, the interface to the hands-free unit is provided as a plug for plugging into a mobile cellular telephone or into a vehicle phone such as a car phone (each provided with an onboard hands-free unit). It is also possible to provide the interface to the hands-free unit as a plug for plugging into a hands-free unit for connecting a mobile cellular telephone.

The user-input interface is located on said housing. The user-input interface is provided with an input device for and accessing applications of said menu of said terminal device. In a basic embodiment this input device for browsing can be embodied as a set of browsing keys wherein two or four keys are provided for browsing a phone menu and one key is provided for selecting a menu item. It is also envisaged to implement a joystick, a navi-roller, a scroll wheel, trackball, a touch pad as an input device for browsing. One aspect of this invention is that soft keys can be implemented in the remote control which change their function as indicated in the display according to the phone state, an application currently running in the phone or a selected menu item.

In contrast to conventional input capabilities of hands-free units or vehicle kits, a user can access all menu items of the telephone via the remote control. The remote control of the hands-free unit is suitable and adapted for in-car usage, as all menu items can be accessed via a (with respect to the standard phone interface restricted) user-input interface.

With the present invention a user can access all important items that go beyond simple taking and terminating calls, activating voice dialing and volume control of the hands-free unit.

It is envisaged to implement this remote control unit as an addition to an existing remote control unit, which only enables simple taking and terminating calls, activating voice dialing and volume control of the hands-free unit. It is therefore possible to implement the browsing remote control with a housing provided with a mechanic and electric interface for receiving a remote control already provided in a vehicle. This embodiment provides a modular remote control for vehicle hands-free units.

The present invention provides an access to the menu structure of a mobile phone when connected to said remote control unit. The connection of the remote control unit to the hands-free unit or the mobile phone can be provided via wired or a wireless connection. The input device for browsing may be implemented by a (minimum) set of keys that allow full control of the mobile phone, comprised of at least soft keys and a four-way menu key as in the mobile phone. In a basic embodiment of the remote control no further keys for call accept, call end and alphanumerical keys are provided.

With the remote control unit of the present invention the user can access all functions that can be reached via the menu structure of the mobile telephone.

In case of e.g. Nokia phones of the "series 60" the remote control unit for all applications can be achieved by using a remote control that comprises the minimum set of keys, which is needed to fully control a mobile phone: SEND and END keys, two softkeys, a 5-way scroll-key, an application key, and a clear-key. Whenever the user presses such a key, the information that a key is pressed will be sent to the mobile phone (directly or via a hands-free unit) and will be treated in the mobile phone, as if the respective key was pressed on the mobile phone's navigation keys. There could be scroll-wheel (or similar) provided on the remote control, which is used to select and enter a number with the help of a special application on the mobile phone.

As an example, the remote control unit can be used to control a navigation application. The following functions could be available via the remote control: change view (map vs. street list), change speaker volume, end/resume navigation. With the remote control (in the basic version) the user can switch to another application, e.g. for reading and writing short messages.

In an example embodiment said user-input interface is provided with keys for taking and terminating telephones calls, that is connected to said interface to said hands-free unit. It is also envisaged to provide further keys such as a menu selection key and a volume control input element on the remote control. The remote control might also comprise an ITU-T keypad for entering numbers. The ITU-T keypad can also be used for entering characters for typing short messages SMSs. In this case e.g. a T9 logic (in the telephone) an ITU-T keyboard can speed up the input process. It is contemplated to provide a QWERTY-keyboard on the remote control for entering characters.

In another example embodiment said remote control unit for a hands-free unit for vehicles is further provided with a control and logic circuit in said housing. The control and logic circuit is connected between said interface to said hands-free unit and said user input interface.

The control and logic circuit can be provided to decrease the number of cores in e.g. a cable interface connection to the hands-free device of the telephone. The control and logic circuit can be used to multiplex input events received via the input interface via a two-core cable to the hands-free unit (or a cellular phone).

It is also envisaged to implement a force feedback module in the remote control to enable a tactile input confirmation. This may be implemented by a vibration element, a keykick actuator or the like in the housing of the remote control or in the input elements.

In yet another example embodiment said interface to a hands-free unit is a wireless interface. It is envisaged to implement the remote control unit with a wireless interfaces to reduce the number of cables to be laid with in said vehicle.

In another example embodiment of said remote control unit said user-input interface is provided with piezo elements powering said wireless interface. The keys of the input device for browsing and selecting mobile phone menu can be provided with piezo elements. If the remote control unit is embodied as a uni-directional interface from the control to the hands-free unit (or telephone), it should be possible to user piezo technology, as the distances between the remote control and the target device (the telephone or the hands-free unit) are relatively short (e.g. below one meter). The short distances in connection with the piezo power would enable a remote control element without any power lines, remote control lines or even power supply.

In yet another example embodiment of the present invention said wireless interface comprises an optical interface. The optical interface can be embodied as infrared interface, an ultra-violet interface, or as a visible light interface. When using piezo elements e.g. LED may be powered to transmit an input signal code according to a received user-input.

It is also contemplated to use an opto-mechanical interface e.g. in form of a mechanical semaphore that can be "read" by an optical vision system in the hands-free unit or in the mobile telephone. When pressing a key on the remote contr ol a structural element on a surface directed to a vision system of the hands-free unit (or the mobile telephone) changes and indicates that user-input has been performed. When using e.g. infrared colors the structural change may not even be perceptible by the human eye.

In yet another example embodiment of the present invention said wireless interface comprises a radio interface. The interface can be embodied as a Bluetooth interface or a W-LAN (wireless local area network) interface. In case of Bluetooth, this could be implemented by a human input device profile (HID profile). If this profile is included in the phone, then the implementation of this concept can be achieved with low effort.

According to another aspect of the present invention a hands-free unit for a vehicle is provided comprising an interface to a remote control unit as described in the preceding description. This hands-free device allows it to connect a remote control to at least access the menu structure of a connected mobile telephone.

According to yet another aspect of the present invention a hands-free unit for a vehicle is provided with a remote control unit according to the preceding description. In contrast to the terminal with an interface the hands-free unit is provided with a connected remote control unit. In view of the increasing miniaturization in the field of consumer electronics it is also contemplated to provide the user interface on the housing of the hands-free unit. It is also envisaged to incorporate the electronics of the hands-free into the housing of the remote control. This embodiment may be implemented by a hard-wired cable connection without plugs and sockets between the hands-free unit and the remote control.

The connection between the remote control unit and the hands-free unit can be provided as a wired or a wireless connection such as Bluetooth.

The remote control of all applications can be achieved by using a remote control unit that comprises the minimum set of keys, which is needed to fully control a mobile phone, e.g. (for a "series 60" phone): SEND and END keys, two softkeys, five-way scroll element, an application key, and a clear-key. Whenever the user presses such a key, the keypress information will be sent to the mobile phone (cf. Bluetooth HID Profile directly or via a hands-free unit) and treated in the mobile phone, as if the respective key was pressed on the keypad of the mobile phone.

The remote control unit might also comprise an ITU-T keypad for entering numbers. Alternatively, there could be scroll-wheel (or similar) on the remote control, which is used to select and enter a number with the help of a special application on the mobile phone.

According to another aspect of the present invention a mobile terminal device is provided. The mobile terminal comprises (a housing), a central processing unit, an interface to a cellular communication network, a user-input interface and a display. As such the terminal device is a conventional terminal device, wherein said central processing unit, said interface to a cellular communication network, said user-input interface and said display are located in or on said housing. Said interface to a cellular communication network, said user-input interface and said display are connected to said central processing unit. The display is provided for displaying operational information, and the said central processing unit is configured to change the form of representation of display upon a reception of a user-input received via said user-input interface.

The invention provides a terminal device that can modify the display representation of the contents with e.g. larger fonts for easier navigation to compensate for the larger viewing distance when the phone is placed in a cradle. In case of larger fonts consequence only a reduced functionality set of menu items may be supported as when a standard display mode is selected. Especially senior citizens with reduced eyesight may appreciate a display with enlarged fonts and increased readability. Additionally, elder persons can access and use mobile terminals when suffering on long-sightedness without using spectacles. These people tend to use devices with extended arms to position the display within the accommodation range of the eye. In this eye distance the user can focus the display content, which is anyhow to small to be readily recognized at this distance.

It is for example possible that e.g. the phone book (as part of the menu structure) is depicted as usual or in an enlarged way but only phone book entries can be selected and no new phone number can be created. In case of terminals with upright format displays, it is also envisaged to turn the displayed content by 90° to enable to read the phonebook entries with enlarged characters without reducing the readability by a increased number of lines required for a single entry. The technological background for 90° display turns may be found in Nokia 68XX series telephones. In a simplest embodiment two different display controllers may be embodied in the telephone for displaying the information in two different formats. In the increased character display mode some menu lists may be embodied shorter, so that a user may find certain menu items faster.

In another example embodiment said mobile terminal device further comprises an interface to a hands-free unit of a vehicle. This allows to adapt the contents displayed on the display of the mobile terminal (or mobile cellular phone) for in-car usage e.g. by using larger fonts. With the present invention the user output interface can be specially designed for usage in the car. When provided with a hands-free-unit having a connection to a vehicle bus it is possible to couple e.g. the illumination of the display to the status of an passenger compartment illumination of to the status of the vehicle lights.

It is contemplated that the terminal device can detect if it is connected to the hands-free unit of a vehicle and may change the display appearance of some applications (larger fonts, easier navigation) as soon as the mobile phone is connected to the car kit.

The change of the appearance of some applications once the mobile phone is connected to the hands-free unit (or car kit) can be realized by implementing a second "car" view into the important applications like telephony or reading messages.

The interface to the hands-free unit for a vehicle can be implemented by a hard-wired connection or by a wireless connection such as Bluetooth or W-LAN.

In another example embodiment of the terminal device said user-input interface is further provided with an interface to a remote control as disclosed in the preceding description. This allows to browse the menu structure of the mobile terminal device via wired or a wireless connection.

It is contemplated to utilize a single interface (e.g. Bluetooth) to connect the terminal with the hands-free unit and with the remote control. This embodiment allows a more wireless implementation of a hands-free unit and a remote control in a vehicle. More sophisticated solutions of hands-free units may use Bluetooth for all connections between the components of a hands-free unit (such as microphones, loudspeaker, radios, navigation systems...).

With the present invention the display mode for in-car use of a mobile phone can be changed such that a user can use the remote control of the car kit to use all features and applications of the mobile phone, as if using the mobile phone's keypad. Moreover, some important applications change their appearance (larger fonts, easier navigation) as soon as the mobile phone is connected to the car kit.

With the remote control (in the basic version) the user can switch to another application, e.g. SMS reading, whereby the SMS is displayed with a larger font.

In another example embodiment said mobile terminal device provides two forms of representation for the display of operational information, a first "handheld mode" form of representation, and a second "in vehicle hands-free mode" form of representation. The information in the second form of representation comprises selected information displayed in simplified form.

It is also contemplated to use a color restriction in the second form or representation, to achieve a higher contrast of the depicted display content. IT is also envisaged to use a color restriction to fit the design characteristics of a vehicle.

The invention provides a terminal device that can modify the display representation of the contents with e. g. larger fonts or easier navigation to compensate for the longer viewing distance when the phone is placed in a cradle of a vehicle hands-free unit.

In consequence only a reduced functionality set of menu items may be supported when the phone is placed in the cradle and controlled by the remote control.

In another example embodiment said mobile terminal further has a plurality of operating characteristics and means for adjusting said operating characteristics, means for defining a plurality of groups of said operating characteristics and means for selecting one of said defined groups. Each said defined groups of operating characteristics include predetermined values of said operating characteristics. The means for selecting one of said defined groups is connected to said user-input interface. The means for selecting one of said defined groups can also be connected to an interface to said remote control. The means for selecting one of said defined groups can also be connected to an interface to a hands-free unit.

This allows to select one of said group of operating characteristics according to the detected hands-free operating mode detected via said interface (especially via said interface to said hands-free unit and or said remote control).

This embodiment can provide (in addition to the remote controllability) the feature of automatically adapting or activating the settings of the mobile phone to an "in-car" profile when a connection to a hands-free unit is detected. It is also envisaged to adapt the settings of the mobile phone to an "remote control" profile when a connection to a remote control is detected. The display mode and other settings can be adapted to the operation in a car or with a remote control. It is especially desired to adapt the display mode to the fact if a hands-free unit is detected or not.

With the remote control of the present invention it is for example possible to remote control the functionality that can be accessed via a menu structure. The remote control can also be used in e.g. a home environment to use the remote control as a character input device for messaging.

According to another aspect of the present invention a method for changing the forms of representation on the display of mobile cellular telephone device is provided. The method comprises receiving an input indicating that said mobile cellular telephone is to be operated in a hands-free mode and changing the display mode from a first handheld mode form of representation, to a second in vehicle hands-free mode form of representation. In the method the information in the second form of representation comprises selected information displayed in simplified form. The selected information comprises e.g. that a battery status indication is suppressed, that the time/datum indication on the display is suppressed and that a background image or the indication of network provider is suppressed. It is envisaged to keep the display of the signal strength in a conventional form. It is contemplated to depict the selected display content in an enlarged scale to enable a user to read the display content from a larger distance.

This enables user to select a display mode for visually handicapped persons, or other senior citizens with restricted eyesight. In case a user activates e.g. an "in-car" profile when entering a car environment (e.g. connect the phone to a hands-free unit of a car) the user switches the phone applications to the described mode.

In another example embodiment of the present invention the method further comprises receiving an input indicating that said mobile cellular telephone is operated in a handheld mode, and changing the display mode from said second in-vehicle hands-free mode form of representation to said first handheld mode form of representation.

That is, when the user leaves the car environment and switches the profile from "in-car" or "hands-free" mode to "handheld mode" and the phone is disconnected to the hands-free unit the phone applications the terminal switches to the standard display mode.

In standard operation the user can select between the "in-car" profile and a "standard" profile for selecting a first or a second display mode. It is also envisaged to implement a menu item to enable a user to select a first (standard) or a second (magnified/enlarged) display mode. In a standard implementation a user can select display mode via a standard telephone user interface (i.e. the ITU-I keypad and / or the menu browsing keys / input elements).

In another example embodiment said input is received as a user-input via a remote control. It is contemplated to adapt the display mode upon the detection of a connection to a remote control. That is, the telephone may automatically change the display mode upon the detection of a connected remote control. In case of a wireless interface between the remote control and the terminal device provided with an automated device discovery protocol, a connected remote control may be recognized by a changed display mode.

In yet another example embodiment said input indicating a hands-free mode is received as a signal from a connected hands-free unit.

Similarly to the above automated discovery protocol implementation, the terminal device may automatically change the display mode when a connection to a hands-free unit is detected. Especially in the case of mobile terminal and a hands-free unit with a cradle e.g. the detection of a hands-free unit via contacts may serve as said input indicating a hands-free mode. That is, if a user enters the car environment (i. e. the phone is connected to the hands-free unit of a vehicle by inserting it into a cradle or by automatic wireless connection) the phone display mode switches to the described mode.

When the user now leaves the car environment (i. e. the phone is disconnected to the hands-free unit of a vehicle e.g. by taking the phone out of the cradle) the phone applications switch back to the standard mode. It may be noted that in case the standard mode is also an enlarged character mode, the size of the displayed characters may not change.

In still another example embodiment of the present invention said method further comprises adjusting a plurality of operating characteristics upon the detection of an input indicating that said mobile cellular telephone is operated in a hands-free mode. This embodiment can adapt a number of different settings to an "in-car" profile when a connection to a hands-free unit of a vehicle is detected. It is for example envisaged to turn off a vibration alarm, change the telephone signals for incoming calls, received short messages (SMS) and received multimedia messages (mums). When the user enters the car environment (and places the phone in a cradle of a vehicle hands-free unit) the phone applications switch to the described mode and a profile switch to a "in-car" profile may be executed.

The "in-car" user interface/display mode for mobile phones enables a user to use the remote control of a hands-free unit to access all features and applications of the mobile phone, such as if using the keypad of the mobile phone. Moreover, some important applications can automatically change their appearance (larger fonts, simpler navigation menu) as soon as the mobile phone is connected to the hands-free unit of the vehicle.

According to yet another aspect of the invention a software tool is provided comprising program code means for carrying out a method of the preceding description when said program product is run on a mobile terminal device, a mobile cellular phone or a hands-free unit of a vehicle.

According to another aspect of the present invention a computer program product downloadable from a server for carrying out a method of the preceding description is provided, which comprises program code means for performing all of the steps of the preceding methods, when said program is executed on a mobile terminal device, a mobile cellular phone or a hands-free unit of a vehicle.

According to yet another aspect of the invention a computer program product is provided comprising program code means stored on a computer readable medium for carrying out the methods of the preceding description, when said program product is run on a mobile terminal device, a mobile cellular phone or a hands-free unit of a vehicle.

According to another aspect of the present invention a computer data signal is provided. The computer data signal is embodied in a carrier wave and represents a program that makes the computer perform the steps of the method contained in the preceding description, when said computer program is run on a mobile terminal device, a mobile cellular phone or a hands-free unit of a vehicle.

In the following, the invention will be described in detail by referring to the enclosed drawings in which:
Figures 1A to 1C depict a mobile telephone and two embodiments of remote controls.
Figure 2 shows an implementation of a hands-free unit in a car to visualize one aspect of the present invention,
Figures 3A to 3C visualize different embodiments of display representations of a content displayed on a conventional mobile phone and without an with the present invention,
Figure 4A and 4B show another example embodiment of a mode for depicting a display content conventionally and with the present invention.
Figure 5 is a schematic view of a terminal device according to the present invention.
Figures 6A and 6B show flowcharts for performing a display content adaptation according to the present invention.

In the detailed description that follows, same or identical components have been given the same reference numerals, regardless of whether they are shown in different embodiments of the present invention. In order to clearly and concisely illustrate the present invention the drawings may not necessarily be to scale and certain features may be shown in somewhat schematic form.

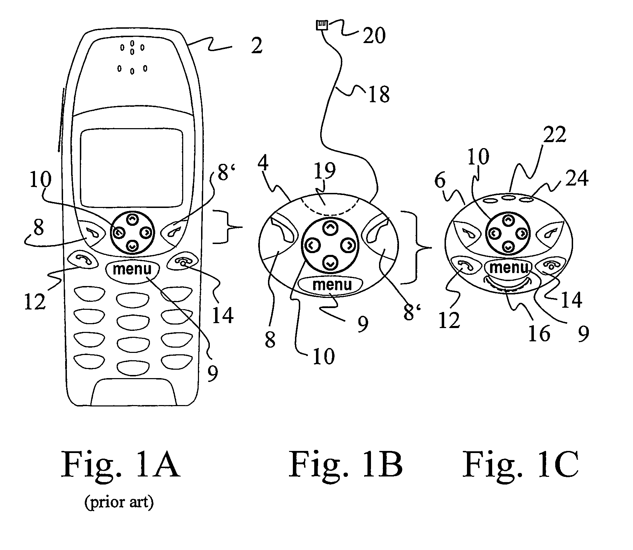

Figures 1A to 1C depict mobile telephone and two embodiments of remote controls. Figure 1A depicts a conventional telephone such as known from the of the 63XX series from Nokia. The phone 2 is provided with a loudspeaker, a display an ITU-T keypad and a microphone all not provided with reference signs. The phone is also provided with 4- or 5-way key element (for tilting and pressing) for browsing 10 and two menu keys 8 and 8' and a menu key 9. The phone 2 further comprises a key 12 for dialing and taking incoming phone calls and one key 14 for terminating calls and rejecting incoming phone calls.
Figure 1B depicts a basic embodiment of a remote control. The remote control 4 is provided with a 4 or 5 way key element for browsing 10, two menu keys 8 and 8' and a menu key 9 analogue to the respective user-input elements of the mobile telephone. In contrast to the size of the original keys of the telephone, the telephone keys are enlarged to provide as easier user-input. It is possible to arrange the telephone keys in the same manner as on the terminal device, to provide a user with the same interface elements in a known manner. An advantage of such a similar user interface is that a user has no need to learn the functionality of the user interface but can simply use the knowledge of everyday phone use to instantaneously remote control the phone in the cradle. Some of the menu indicating elements may be suppressed on the display for remote control use. The remote control can provide access to the whole menu structure of the connected (63XX series) mobile telephone. It is to be noted that it is also possible to use a universal set of browsing and menu keys (Joysticks, Trackballs, 2-, 4- and 8-Way rocker-keys...) capable of remotely navigating through any menu structure provided by any mobile phone on the market.

The remote control of Figure 1B is provided with a removable element 19 that may be removed for placing a conventional single-button remote control in or at the housing of the remote control 4. Thereby, the remote control 4 may serve to provide an additional functionality to a state of the art remote control providing a button for taking and terminating a call and for activating voice dialing. The remote control 4 of figure 1B is provided with a wired interface 18 that may be connected or plugged into a hands-free unit of a vehicle.

Figure 1C depicts a more sophisticated remote control 6 providing the functionality of the remote control 4, and providing additionally a 4- or 5-way key element for browsing 10, two menu keys 8 and 8' and a menu key 9 analogue to the respective user-input elements of the mobile telephone. The control 6 is further provided with a key 12 for dialing and taking incoming phone calls and one key 14 for terminating calls and rejecting incoming phone calls. The control 6 is further provided with a volume control input element 16 to enable a user to change the volume or the loudness in hands-free operation.

The control 6 is further provided with an interface 22 to a hands-free unit. The interface may be provided by an optical infrared transmission. It is also envisaged to implement a status LED to indicate that the remote control is actually operable. It is also envisaged to implement a (possibly wireless) interface to a vehicle playback or radio device to mute e.g. played music if an incoming telephone call is detected. It is also envisaged to implement a number of different interface elements to other terminal devices. It is for example envisaged to implement two different interfaces to at least two terminal devices to enable a person on the driver seat as well as persons on the passenger seats to use the hands-free unit (and the remote control). Thus a phone selector switch or key may be implemented in the remote control.

It is contemplated to use the remote control with hands-free units that may be built in vehicle radios or that may be built-in the terminal device itself.

The remote control may also be used to control a navigation application. The following functions could then be available: change view (map vs. street list), change speaker volume, end/resume navigation.

The remote control may also be provided with an interface element for controlling an onboard radio device. The remote control may also be provided with an interface element for controlling an onboard navigation device (on the basis of GPS, GloNaS, Galileo....).

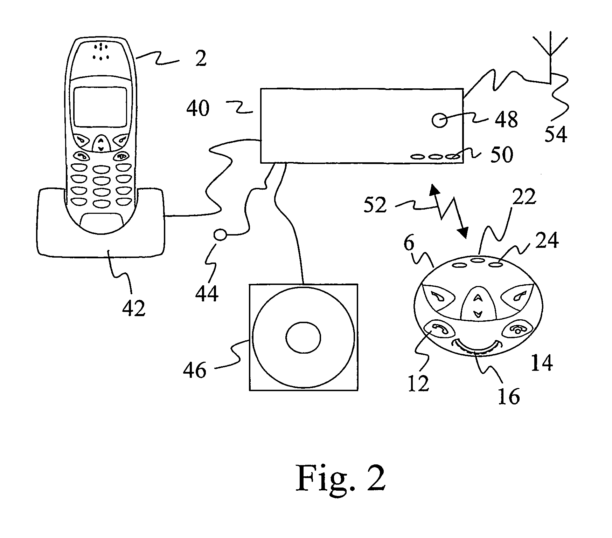

Figure 2 shows an implementation of a hands-free unit in a car to visualize one aspect of the present invention. Figure 2 depicts the cellular phone 2 of figure 1 inserted in a cradle 42, that may be connected to the dashboard of a vehicle. In figures 2, 3 and 4 phones and remote controls are depicted with a conventional Nokia 63XX series user input element for browsing. It may be advantageous to also implement the 4-Way navigation keys and an additional menu key as disclosed in Figure 1. The phone 2 is connected via a wired connection to the hands-free unit 40. The hands-free-unit 40 is provided with an external microphone 44, an external loudspeaker 46 (maybe via an in-vehicle music player or radio device), and an external telephone antenna 54. The hands-free unit 40 is provided with an on/off switch 48. The hands-free unit 40 is provided with an interface 50 to the remote control 6. The features of the depicted remote control 6 are already disclosed Figure 1C, thus a detailed description of the features of remote control is economized for the sake of clarity and conciseness. The hands-free unit may be provided with an interface to a vehicle radio.

It is also envisaged to replace some or even all wired connections in Fig. 2 by wireless technology such as infrared and/or radio transmission such as e.g. Bluetooth.

It is especially envisaged to implement a device that is capable of providing a Bluetooth connection between the remote control 6 and the phone in the cradle. This would allow to hide the hands-free unit, to provide a charger in the cradle, and would also allow to operate (with an activated Bluetooth module) to use and remote control the phone / hands-free unit even when the cellular telephone is not placed in the cradle.

The phone 2 in the cradle 42 can be provided with an input signal to indicate that the phone is connected to a hands-free unit. With the remote control a user can switch to another application, e.g. SMS reading, whereby the SMS is displayed with a larger font (not shown here).

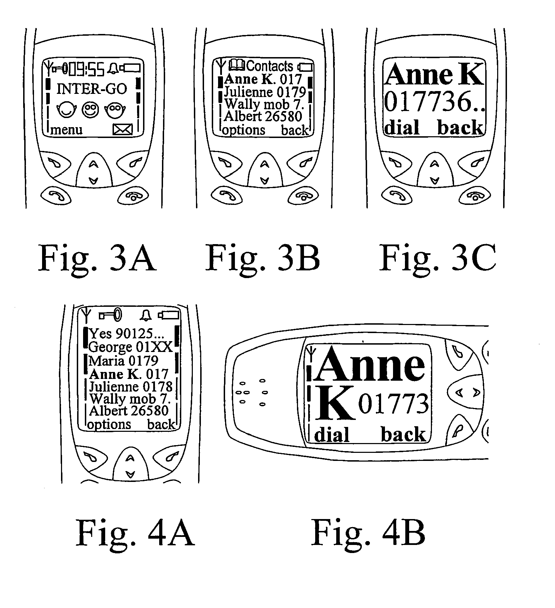

Figures 3A to 3C visualize different embodiments of display representations of a certain content displayed on a conventional mobile phone and without an with the present invention.
Figure 3A shows a conventional display content usually depicted on a conventional telephone in the idle mode. On the screen there are depicted a number of different information of different importance. On the right side a bar display indicates the actual battery status as indicated by the miniaturized battery icon in the top right corner. A signal strength indicator is placed on the left side as a bar display indicated by the miniaturized battery antenna icon. In the top line some icons show that the keyboard is locked, the actual time (9:55) and that an alarm is activated. In the lowest line the actual operational functions allocated to the menu keys is depicted. In the middle a fantasy name of a cellular network provider is depicted, and a "funny" icon display content is displayed.
Figure 3B shows a conventional display content usually depicted on a conventional telephone in the "phonebook" mode. The bar display indicating the actual battery status and the signal strength are still displayed. The top line is occupied by the name of the actual menu item "Contacts" or "Phone book" and is illustrated with a book-icon. In the lowest line the actual operational functions (which actually have changed) allocated to the menu keys is depicted. The central part of the display is filled with four name entries of the "contacts-" or "phone book-" menu.

For an average human with average eyesight the display content is recognizable or readable in a 30-cm distance without any problem. However, an average human with average eyesight might find it difficult to read the display content with a eye-distance of approximately 1m, especially when considering ambient light conditions and the reduced contrast values of mobile phone with respect to the printed figures 3 and 4. When considering a shortsighted or a long-sighted person actually not carrying spectacles, the readability may be considered to be poor.

Figure 3C shows a display content with a considerably increased readability. Actually the phone is in the same "phonebook" mode as the device of figure 3B. The bar display indicating the actual battery status and the signal strength indicator are not depicted. The top line is not depicted. In the lowest line still the actual operational functions (which actually have changed) allocated to the menu keys is depicted in a enlarged way. The whole display area is filled with only a single phone book entry in an enlarged and contrast enhanced form. All "non-vital" information is suppressed to increase the visibility and readability of the information of interest: The phonebook entry itself.

This focussed information may be read even in poor ambient light conditions with reduced visibility even from larger distances even with "sub 100%" eyesight. The phone can activate the display mode when a connection to a cradle of a hands-free unit is detected.
Figure 4A and 4B show another example embodiment of a mode for depicting a display content conventionally and with the present invention. Figure 4A depict the phonebook display content (as in case of figure 3B) on a telephone with an upright format display in the conventional manner.
Figure 4B shows an adaptation of the enlarged display mode for a 90°-tilted operation. The depicted phonebook display content (as in case of figure 3C) can be displayed in a 90°-tilted operation in a clearer way as broader lines reduce the number of line changes, and allow for bigger fonts. This aspect serves to fully exploit the capabilities of an upright display format terminal for low visibility conditions.

In a more sophisticated system the mobile device may be provided with an interface or a sensor to determine if the cradle is provided for upright or an on side position of the terminal device in said cradle. In contrast to devices that may use the ability to change the orientation of a certain display content the present it is desirable to change also the size (of the characters), the information content and the contrast of display.

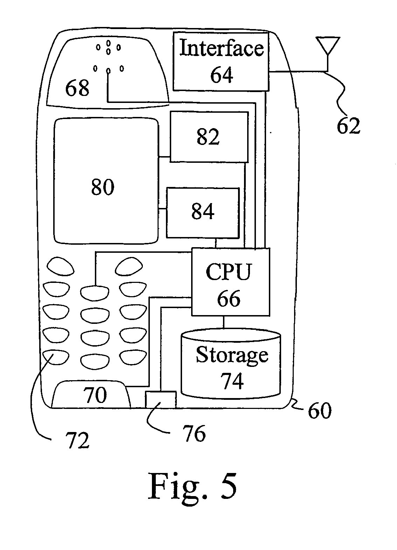

Figure 5 is a schematic view of a terminal device according to the present invention.

The left side of figure 5A represents the conventional telephone equipment of a 63XX series cellular phone from Nokia. The phone 60 is provided with a loudspeaker 68, a display 80 an ITU-T keypad 72 and a microphone 70. The phone is also provided with a storage 74, a central processing unit 66, an interface to a cellular communication network 64 provided with an antenna 62. A first display controller 82 is provided between the CPU 66 and the display 80 of the telephone. These components can also be found on conventional cellular telephones.

The depicted telephone further comprises an interface 76 to a remote control, enabling remote access to the menu structure of the phone. The interface 76 to a remote control is connected to said CPU 66. The interface may be combined with an interface for a hands-free unit as depicted in figure 2. It is contemplated to combine this interface with a connection to a charger to enable recharging of the battery of the terminal device when connected to the remote control. It is possible to use a wired interface to a remote control also as to control a hands-free unit that is built in said cellular telephone. It is also envisaged to implement the interface to said hands-free unit as wireless interface relying e.g. on Bluetooth technology.

The terminal device is also provided with a second display controller 84 connected between the CPU 66 and the display 80 of the telephone. The CPU 66 can be provided with the capability to select the first of the second display unit for operating the display 80.

The first display controller 82 may be configured to use a conventional form of representation for operating the display while the second controller may be configured to use an enlarged form of representation of selected information on the display 80.

It is especially contemplated that the CPU 66 is configured to change from the first display controller to the second display controller when a signal is received from the remote control unit indicating that the terminal is connected to a remote control.

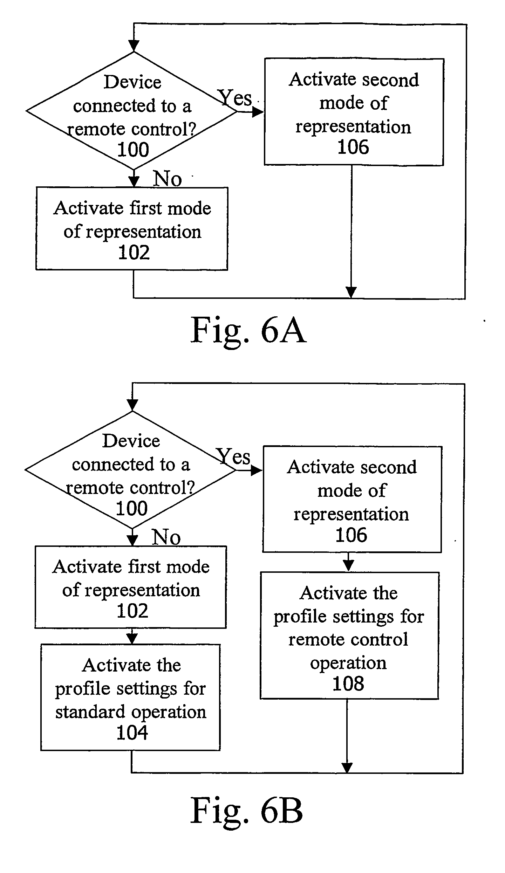

Figure 6A shows a flowchart for performing a display content adaptation according to the present invention. The flowchart comprises only one request 100 to determine if a remote control is connected to the terminal device. If there is no remote control connected to the terminal, the standard display configuration is activated 102. If there is a remote control connected to the terminal, the remote control display configuration is activated 106.

The depicted flow diagram uses the detection or the determination of a connected remote control as the user-input indicating that said mobile cellular telephone is to be operated in a hands-free mode. This user-input may be an indirect user-input such a inserting the mobile phone into cradle of hands-free unit of a vehicle. The expression hand-free mode or handheld mode may also be called "normal mode" and "enlarged display mode", wherein in the enlarged mode the information is displayed on the display as selected information displayed in simplified and enlarged form.

Figure 6B is the flowchart of figure 6A that has been extended by the additional steps of adapting a device profile, after the display mode as the first or second mode of representation has been selected. If there is no remote control connected to the terminal, the standard display configuration is activated 102, and the profile settings for standard operation are activated 104. If there is a remote control connected to the terminal, the remote control display configuration is activated 106 and the profile settings for remote control operation are activated 108. These extensions may serve to automatically adapt the whole functionality of the mobile phone or mobile device to the requirements of handheld and remote controlled operation such as e.g. a in vehicle operation. These adaptations may comprise the change of the used display colors to fit e.g. the design guidelines of the car designer, to prevent that the display colors of the phone are perceived as disturbing. The adaptation may comprise the deactivation of a vibration alarm to prevent rattling noise from the cradle in case of an incoming phone call. The volume of the audio output may be adapted to a predetermined value for in-car use. Other adaptations may also be implemented to automatically adapt the settings of a mobile phone for maximum performance in hands-free operation.

The present invention allows it to use phone hands-free systems in car environment easier and more comfortable. Chauffeurs, taxi drivers, ambulance drivers, co-drivers, front seat passengers, detectives and other people spending much time sitting and waiting (and especially non-driving) in cars will appreciate the benefits of the present invention.

The advantage is that an ordinary mobile phone, which usually comprises many different applications, becomes fully usable in the car in a safe and comfortable way.

The suggested new way of depicting information on a mobile device such as a cellular telephone may help to reach senior citizens as customers of enlarged display representation interfaces for mobile electronic terminals.

The following section is provided to explicitly cite some possible implementations. The hands-free unit may be incorporated in the remote control. The hands-free unit may be incorporated in a vehicle radio or player. The remote control may be provided with a number of different (possibly wireless) interfaces to the hands-free unit and to the mobile terminal device. The mobile terminal device can be a cellular phone, a communicator or mobile phone enabled terminal device. The terminal device can be cellular phone of the GSM standard, the I-mode standard, or the UMTS standard, or of any other communication standard for mobile or vehicle operable communication, and is not to be restricted to the limited radio communication and cell communication capabilities of the closing days of 2004. It is definitively intended that the expression "mobile terminal device" covers all coming communication to be developed within e.g. the next 20 years.

This application contains the description of implementations and embodiments of the present invention with the help of examples. A person skilled in the art will appreciate that the present invention is not restricted to details of the embodiments presented above and that the invention can also be implemented in another form without deviating from the characteristics of the invention. The embodiments presented above should be considered illustrative, but not restricting. Thus the possibilities of implementing and using the invention are only restricted by the enclosed claims. Consequently various options of implementing the invention as determined by the claims, including equivalent implementations, also belong to the scope of the invention.

## Claims

1. Remote control unit (6) of a hands-free unit (40) of a mobile terminal device (2) for the use in vehicles, whereby said terminal device comprises a menu for accessing applications on said terminal device,
said remote control unit (6) comprising: a housing, an interface to a hands-free unit, said interface being connected to said housing, and a user-input interface located on said housing and being provided with:
a. an input device (9, 10) for browsing and accessing applications via said interface to said hands-free unit of said menu of said terminal device (2), being connected to said hands-free unit (40), and for remote controlling said mobile terminal device (2) to a display mode for a 90° tilted operation of said mobile terminal device (2), wherein in said 90° tilted operation the size of the displayed characters is changed, the information content is changed and the contrast of the display is changed for low visibility conditions.

2. Remote control unit of a hands-free unit according to claim 1, wherein said user-input interface further comprises keys for taking and terminating telephones calls (8, 8'), being connected to said interface to a hands-free unit.

3. Remote control unit according to claim 1 or 2, further comprising a control and logic circuit provided in said housing, connected between said interface to said hands-free unit and said user-input interface.

4. Remote control unit according to anyone of claims 1 to 3, wherein said interface to a hands-free unit is a wireless interface (22).

5. Remote control unit according to anyone of claims 4, wherein said wireless interface (22) comprises an optical interface.

6. Remote control unit according to anyone of claims 4 or 5, wherein said wireless interface (22) comprises a radio interface.

7. Hands-free unit (40) for a vehicle comprising an interface (50) to a remote control unit (6) according to anyone of claims 1 to 6.

8. Hands-free unit (40) for a vehicle provided with a remote control unit (6) according to anyone of claims 1 to 6.

9. Mobile terminal device (60), comprising:
b. a housing
c. central processing unit (66) located in said housing, an interface to a cellular communication network (64), connected to said central processing unit (66), and a user-input interface (72), connected to said central processing unit (66),
d. a display (80) connected to said central processing unit (66) for displaying operational information, wherein said central processing unit (66) is configured to change the form of representation of display (80) upon reception of a user-input received via said user- input interface (72), and
e. wherein said user interface (72) further comprises an interface (76) to a remote control unit (6), according to anyone of claims 1 to 6, and
f. wherein said mobile terminal device is configured for being remote controlled to activate a display mode for a 90° tilted operation of said mobile terminal device (60), wherein in said 90° tilted operation the size of the displayed characters is changed, the information content is changed and the contrast of the display is changed for low visibility conditions.

10. Mobile terminal device according to claim 9, wherein said user-input interface further comprises an interface to a hands free unit according to anyone of claims 7 or 8.

11. Mobile terminal device according to anyone of claims 9 to 10, wherein said two forms of representation are provided for the display (80) of operational information, a first handheld mode form of representation, and a second in vehicle hands-free mode form of representation, wherein the information in the second form of representation comprises selected information displayed in simplified form and a display mode for a 90° tilted operation.

12. Mobile terminal device according to anyone of claims 9 to 11, said terminal device further having a plurality of operating characteristics and means for adjusting said operating characteristics, **characterized by**: - means for defining a plurality of groups of said operating characteristics, wherein each group includes predetermined values of said operating characteristics, - means for selecting one of said defined groups, and wherein said means for selecting one of said defined groups is connected to said user-input interface.

13. Method for changing the forms of representation on the display (80) of mobile cellular telephone device (80) comprising: - receiving an input as a user- input via a remote control unit, indicating that said mobile cellular telephone is operated in a hands-free mode, - changing the display mode from a first handheld mode form of representation to a second in-vehicle hands-free mode form of representation, wherein the information in the second form of representation comprises selected information displayed in simplified form and in a display mode for a 90° tilted operation, wherein in said 90° tilted operation the size of the displayed characters is changed, the information content is changed and the contrast of the display is changed for low visibility conditions.

14. Method according to claim 13 further comprising: - receiving an input indicating that said mobile cellular telephone is operated in a handheld mode, - changing the display mode from said second in-vehicle hands-free mode form of representation in a display mode for a 90° tilted operation to said first handheld mode form of representation.

15. Method according to claim 13 or 14, wherein said input indicating a hands-free mode is received as a signal from a connected hands-free unit.

16. Method according to anyone of claims 13 to 15, further comprising adjusting a plurality of operating characteristics upon the detection of an input indicating that said mobile cellular telephone is operated in a hands-free mode.

17. Computer program product capable of changing the forms of representation on the display of mobile cellular telephone device, comprising program code sections for carrying out the steps of anyone of claims 13 to 16, when said program is run on mobile cellular terminal or a mobile communication enabled terminal.

18. Computer program product for changing the forms of representation on the display of mobile cellular telephone device, comprising program code sections stored on a machine- readable medium for carrying out the steps of anyone of claims 13 to 16, when said program product is run on a mobile cellular terminal or a mobile communication enabled terminal.

## Patentansprüche

1. Fernsteuereinheit (6) einer Freisprecheinheit (40) einer mobilen Endgerätevorrichtung (2) zur Verwendung in Fahrzeugen, worin die Endgerätevorrichtung ein Menü umfasst, um auf Anwendungen auf der Endgerätevorrichtung zuzugreifen, wobei die Fernsteuereinheit (6) umfasst: ein Gehäuse, eine Schnittstelle zu einer Freisprecheinheit, wobei die Schnittstelle mit dem Gehäuse verbunden ist, und wobei eine Benutzereingabe-Schnittstelle auf dem Gehäuse angeordnet ist und versehen ist mit:
a. einer Eingabevorrichtung (9, 10), die mit der Freisprecheinheit (40) verbunden ist, zum Browsen und zum Zugreifen auf Anwendungen des Menüs der Endgerätevorrichtung (2) über die Schnittstelle zu der Freisprecheinheit, und um die mobile Endgerätevorrichtung (2) in einem Anzeigemodus für einen um 90° geneigten Betrieb der mobilen Endgerätevorrichtung (2) fernzusteuern, wobei in dem um 90° geneigten Betrieb die Größe der angezeigten Zeichen verändert ist, der Informationsinhalt geändert ist und der Kontrast der Anzeige geändert ist, für schlechte Sichtbedingungen.

2. Fernsteuereinheit einer Freisprecheinheit gemäß Anspruch 1, wobei die Benutzereingabe-Schnittstelle weiter Tasten zum Annehmen und Beenden von Telefonanrufen (8, 8') umfasst, die mit der Schnittstelle zu einer Freisprecheinheit verbunden sind.

3. Fernsteuereinheit gemäß Anspruch 1 oder 2, weiter umfassend eine Steuer- und Logikschaltung, die in dem Gehäuse vorgesehen ist und die zwischen die Schnittstelle zu der Freisprecheinheit und die Benutzereingabe-Schnittstelle geschaltet ist.

4. Fernsteuereinheit gemäß einem der Ansprüche 1 bis 3, wobei die Schnittstelle zu einer Freisprecheinheit eine drahtlose Schnittstelle (22) ist.

5. Fernsteuereinheit gemäß Anspruch 4, wobei die drahtlose Schnittstelle (22) eine optische Schnittstelle umfasst.

6. Fernsteuereinheit gemäß einem der Ansprüche 4 oder 5, wobei die drahtlose Schnittstelle (22) eine Funkschnittstelle umfasst.

7. Freisprecheinheit (40) für ein Fahrzeug, umfassend eine Schnittstelle (50) zu einer Fernsteuereinheit (6) gemäß einem der Ansprüche 1 bis 6.

8. Freisprecheinheit (40) für ein Fahrzeug, versehen mit einer Fernsteuereinheit (6) gemäß einem der Ansprüche 1 bis 6.

9. Mobile Endgerätevorrichtung (60), umfassend:
b. ein Gehäuse,
c. eine zentrale Verarbeitungseinheit (66), die in dem Gehäuse angeordnet ist, eine Schnittstelle zu einem zellularen Kommunikationsnetzwerk (64), die mit der zentralen Verarbeitungseinheit (66) verbunden ist, und eine Benutzereingabe-Schnittstelle (72), die mit der zentralen Verarbeitungseinheit (66) verbunden ist,
d. eine Anzeige (80), die mit der zentralen Verarbeitungseinheit (66) verbunden ist, um Betriebsinformationen anzuzeigen, wobei die zentrale Verarbeitungseinheit (66) konfiguriert ist, um die Form der Darstellung auf der Anzeige (80) auf den Empfang einer Benutzereingabe hin zu ändern, die über die Benutzereingabe-Schnittstelle (72) empfangen wurde, und
e. wobei die Benutzerschnittstelle (72) weiter eine Schnittstelle (76) zu einer Fernsteuereinheit (6) gemäß einem der Ansprüche 1 bis 6 umfasst, und
f. wobei die mobile Endgerätevorrichtung konfiguriert ist, um ferngesteuert einen Anzeigemodus für einen um 90° geneigten Betrieb der mobilen Endgerätevorrichtung (60) zu aktivieren, wobei in dem um 90° geneigten Betrieb die Größe der angezeigten Zeichen geändert ist, der Informationsinhalt geändert ist und der Kontrast der Anzeige geändert ist, für schlechte Sichtbedingungen.

10. Mobile Endgerätevorrichtung gemäß Anspruch 9, wobei die Benutzereingabe-Schnittstelle weiter eine Schnittstelle zu einer Freisprecheinheit gemäß einem der Ansprüche 7 oder 8 umfasst.

11. Mobile Endgerätevorrichtung gemäß einem der Ansprüche 9 bis 10, wobei zwei Formen der Darstellung für die Anzeige (80) von Betriebsinformationen bereitgestellt sind, wobei eine erste Form der Darstellung für einen handgeführten Modus und eine zweite Form der Darstellung für einen Freisprechmodus in einem Fahrzeug vorgesehen ist, wobei die Informationen in der zweiten Form der Darstellung ausgewählte Informationen umfassen, die in vereinfachter Form und in einem Anzeigemodus für um 90° geneigten Betrieb angezeigt werden.

12. Mobile Endgerätevorrichtung gemäß einem der Ansprüche 9 bis 11, wobei die Endgerätevorrichtung weiter mehrere Betriebscharakteristika und Mittel zum Einstellen der Betriebscharakteristika umfasst,
**gekennzeichnet durch**
Mittel zum Definieren mehrerer Gruppen der Betriebscharakteristika, wobei jede Gruppe vorbestimmte Werte der Betriebscharakteristika umfasst,
Mittel zum Auswählen einer der definierten Gruppen,
wobei das Mittel zum Auswählen einer der definierten Gruppen mit der Benutzereingabe-Schnittstelle verbunden ist.

13. Verfahren zum Ändern der Formen der Darstellung auf der Anzeige (80) einer mobilen zellularen Telefonvorrichtung (60), umfassend:
- Empfangen einer Eingabe als eine Benutzereingabe über eine Fernsteuereinheit, die angibt, dass das mobile zellulare Telefon in einem Freisprechmodus betrieben wird,
- Ändern des Modus der Anzeige von einer ersten Form der Darstellung für handgeführten Modus zu einer zweiten Form der Darstellung für einen Freisprechmodus in einem Fahrzeug, wobei die Informationen in der zweiten Form der Darstellung ausgewählte Informationen umfassen, die in vereinfachter Form und in einem Anzeigemodus für um 90° geneigten Betrieb angezeigt werden, wobei in dem um 90° geneigten Betrieb die Größe der angezeigten Zeichen geändert ist, der Informationsinhalt geändert ist und der Kontrast der Anzeige geändert ist, für schlechte Sichtbedingungen.

14. Verfahren nach Anspruch 13, weiter umfassend:
- Empfangen einer Eingabe, die angibt, dass das mobile zellulare Telefon in einem handgeführten Modus betrieben wird, und
- Ändern des Anzeigemodus von der zweiten Form der Darstellung für einen Freisprechmodus in einem Fahrzeug in einen Anzeigemodus für einen um 90° gegenüber der ersten Form der Darstellung des handgeführten Modus geneigten Betrieb.

15. Verfahren gemäß Anspruch 13 oder 14, wobei die Eingabe, die einen Freisprechmodus angibt, als ein Signal von einer verbundenen Freisprecheinheit empfangen wird.

16. Verfahren nach einem der Ansprüche 13 bis 15, weiter umfassend:
- Einstellen mehrerer Betriebscharakteristika auf das Erkennen einer Eingabe hin, die angibt, dass das mobile zellulare Telefon in einem Freisprechmodus betrieben wird.

17. Computerprogramm-Produkt, das in der Lage ist, die Formen der Darstellung auf der Anzeige einer mobilen zellularen Telefonvorrichtung zu ändern, umfassend Programmcodeabschnitte zum Ausführen der Schritte eines der Ansprüche 13 bis 16, wenn das Programm auf einem mobilen zellularen Endgerät oder auf einem zur Mobilkommunikation fähigen Endgerät läuft.

18. Computerprogramm-Produkt zum Ändern der Formen der Darstellung auf der Anzeige einer mobilen zellularen Telefonvorrichtung, umfassend Programmcodeabschnitte, die auf einem maschinenlesbaren Medium gespeichert sind, um die Schritte eines der Ansprüche 13 bis 16 auszuführen, wenn das Programmprodukt auf einem mobilen zellularen Endgerät oder auf einem zur Mobilkommunikation fähigen Endgerät läuft.

## Revendications

1. Unité de commande à distance (6) d'une unité mains-libres (40) d'un dispositif de terminal mobile (2) destiné à être utilisé dans des véhicules, moyennant quoi ledit dispositif de terminal comprend un menu pour accéder à des applications sur ledit dispositif de terminal,
ladite unité de commande à distance (6) comprenant : un boitier, une interface vers une unité mains-libres, ladite interface étant connectée audit boitier, et une interface de saisie utilisateur située sur ledit boîtier et étant dotée des éléments ci-dessous :
a. un dispositif de saisie (9, 10) permettant de naviguer et d'accéder à des applications, via ladite interface de ladite unité mains-libres, dudit menu dudit dispositif de terminal (2), qui est connecté à ladite unité mains-libres (40), et pour commander à distance ledit dispositif de terminal mobile (2) en vue d'activer un mode d'affichage pour un fonctionnement incliné à 90° dudit dispositif de terminal mobile (2), dans lequel, dans ledit fonctionnement incliné à 90° la taille des caractères affichés est modifiée, le contenu des informations est modifié et le contraste de l'écran d'affichage est modifié pour des conditions de faible visibilité.

2. Unité de commande à distance d'une unité mains-libres selon la revendication 1, dans laquelle ladite interface de saisie utilisateur comprend en outre des touches pour prendre et mettre fin à des appels téléphoniques (8, 8'), qui sont connectées à ladite interface d'une unité mains-libres.

3. Unité de commande à distance selon la revendication 1 ou 2, comprenant en outre un circuit logique et de commande prévu dans ledit boitier, connecté entre ladite interface de ladite unité mains-libres et ladite interface de saisie utilisateur.

4. Unité de commande à distance selon l'une quelconque des revendications 1 à 3, dans laquelle ladite interface d'une unité mains-libres est une interface sans fil (22).

5. Unité de commande à distance selon la revendication 4, dans laquelle ladite interface sans fil (22) comporte une interface optique.

6. Unité de commande à distance selon l'une quelconque des revendications 4 ou 5, dans laquelle ladite interface sans fil (22) comprend une interface radio.

7. Unité mains-libres (40) pour un véhicule, comprenant une interface (50) d'une unité de commande à distance (6) selon l'une quelconque des revendications 1 à 6.

8. Unité mains-libres (40) pour un véhicule comprenant une unité de commande à distance (6) selon l'une quelconque des revendications 1 à 6.

9. Dispositif de terminal mobile (60), comprenant :
b. un boitier
c. une unité centrale de traitement (66) située dans ledit boitier, une interface d'un réseau de communication cellulaire (64), connectée à ladite unité centrale de traitement (66), et une interface de saisie utilisateur (72), connectée à ladite unité centrale de traitement (66) ;
d. un écran d'affichage (80) connecté à ladite unité centrale de traitement (66) pour afficher des informations opérationnelles, dans laquelle ladite unité centrale de traitement (66) est configurée de manière à modifier la forme de représentation de l'affichage (80) lors de la réception d'une saisie utilisateur reçue via ladite interface de saisie utilisateur (72), et
e. dans laquelle ladite interface utilisateur (72) comprend en outre une interface (76) d'une unité de commande à distance (6), selon l'une quelconque des revendications 1 à 6, et
f. dans lequel ledit dispositif de terminal mobile est configuré de manière à être commandé à distance pour activer un mode d'affichage pour un fonctionnement incliné à 90° dudit dispositif de terminal mobile (60), dans lequel, dans ledit fonctionnement incliné à 90° la taille des caractères affichés est modifiée, le contenu des informations est modifié et le contraste de l'écran d'affichage est modifié pour des conditions de faible visibilité.

10. Dispositif de terminal mobile selon la revendication 9, dans lequel l'interface de saisie utilisateur comprend en outre une interface d'une unité mains libres selon l'une quelconque des revendications 7 ou 8.

11. Dispositif de terminal mobile selon l'une quelconque des revendications 9 à 10, dans lequel lesdites deux formes de représentation sont fournies pour l'affichage (80) d'informations opérationnelles, une première forme de représentation en mode portatif, et une seconde forme de représentation en mode mains-libres embarquée dans le véhicule, dans laquelle les informations dans la seconde forme de représentation comportent certaines informations affichées dans une forme simplifiée et un mode d'affichage pour un fonctionnement incliné à 90°.

12. Dispositif de terminal mobile selon l'une quelconque des revendications 9 à 11, dans lequel ledit dispositif de terminal présente en outre une pluralité de caractéristiques de fonctionnement et un moyen pour régler lesdites caractéristiques de fonctionnement, le dispositif étant **caractérisé en ce qu'**il comporte :- un moyen pour définir une pluralité de groupes desdites caractéristiques de fonctionnement, dans lequel chaque groupe comprend des valeurs prédéterminées desdites caractéristiques de fonctionnement, - un moyen pour sélectionner l'un desdits groupes définis, et dans lequel ledit moyen pour sélectionner l'un desdits groupes définis est connecté à ladite interface de saisie utilisateur.

13. Procédé destiné à modifier les formes de représentation sur l'écran d'affichage (80) d'un dispositif de téléphone cellulaire mobile (80) comprenant les étapes ci-après consistant à : - recevoir une entrée sous la forme d'une saisie utilisateur via une unité de commande à distance, indiquant que ledit téléphone cellulaire mobile est exploité en mode mains-libres, - modifier le mode d'affichage, d'une première forme de représentation en mode portatif à une seconde forme de représentation en mode mains-libres embarquée dans le véhicule, dans lequel les informations dans la seconde forme de représentation comprennent des informations sélectionnées affichées sous une forme simplifiée et dans un mode d'affichage pour un fonctionnement incliné à 90°, dans lequel, dans ledit fonctionnement incliné à 90° la taille des caractères affichés est modifiée, le contenu des informations est modifié et le contraste de l'écran d'affichage est modifié pour des conditions de faible visibilité.

14. Procédé selon la revendication 13, comprenant en outre les étapes ci-après consistant à : - recevoir une entrée indiquant que ledit téléphone cellulaire mobile est exploité dans un mode portatif ; - modifier le mode d'affichage de ladite seconde forme de représentation en mode mains-libres embarquée dans le véhicule, à un mode d'affichage en fonctionnement incliné à 90° de ladite première forme de représentation en mode portatif.

15. Procédé selon la revendication 13 ou 14, dans lequel ladite entrée indiquant un mode mains-libres est reçue sous la forme d'un signal en provenance d'une unité mains-libres connectée.

16. Procédé selon l'une quelconque des revendications 13 à 15, comprenant en outre l'étape consistant à régler une pluralité de caractéristiques de fonctionnement lors de la détection d'une entrée indiquant que ledit téléphone cellulaire mobile est utilisé en mode mains-libres.

17. Produit-programme informatique apte à modifier les formes de représentation sur l'écran d'affichage d'un dispositif de téléphone cellulaire mobile, comprenant des sections de code de programme pour mettre en oeuvre les étapes selon l'une quelconque des revendications 13 à 16, lorsque ledit programme est exécuté sur un terminal cellulaire mobile ou un terminal apte à une communication mobile.

18. Produit-programme informatique pour modifier les formes de représentation sur l'écran d'affichage d'un dispositif de téléphone cellulaire mobile, comprenant des sections de code de programme stockées sur un support lisible par une machine en vue de mettre en oeuvre les étapes selon l'une quelconque des revendications 13 à 16, lorsque ledit produit-programme est exécuté sur un terminal cellulaire mobile ou un terminal apte à une communication mobile.
